# EUROPÄISCHE PATENTSCHRIFT

(11) **EP 0 424 654 B1**
(45) Veröffentlichungstag und Bekanntmachung des Hinweises auf die Patenterteilung: **06.12.1995**
(21) Anmeldenummer: 90117570.3
(22) Anmeldetag: 12.09.1990
(51) Int. Cl.: H04N 7/00, H04N 7/087

(54) **Einrichtung zur Erzeugung und Einrichtung zur Auswertung eines Kennsignals für das Bildseitenverhältnis eines Videosignals**
Device for generating a recognition signal for the image aspect ratio of a video signal
Dispositif pour la génération d'un signal de reconnaissance pour le format d'image d'un signal vidéo

(30) Priorität: 25.10.1989 DE 3935547
(43) Veröffentlichungstag der Anmeldung: 02.05.1991
(73) Patentinhaber: Grundig E.M.V. Elektro-Mechanische Versuchsanstalt Max Grundig GmbH & Co. KG, 90762 Fürth (DE)
(72) Erfinder: Hegendörfer, Max, Grundig E.M.V., Kurgartenstrasse 37, D-8510 Fürth/Bay (DE); Maul, Konrad, Grundig E.M.V., Kurgartenstrasse 37, D-8510 Fürth/Bay (DE)

(56) Entgegenhaltungen:
- EP-A- 0 156 709
- EP-A- 0 168 104
- EP-A- 0 213 912
- EP-A- 0 309 876
- WO-A-86/05644
- US-A- 4 760 455

## Beschreibung

Die Erfindung betrifft eine Einrichtung zur Erzeugung und eine Einrichtung zur Auswertung eines Kennsignals für das Bildseitenverhältnis eines Videosignals.

Sowohl im Rahmen verbesserter PAL-Farbfernsehsysteme als auch bei Satelliten-Farbfernsehsystemen, beispielsweise nach dem D2-MAC-Verfahren, ist es vorgesehen, Videosignale zu übertragen, die entweder ein erstes oder ein zweites Bildseitenverhältnis aufweisen, beispielsweise 4:3 oder 16:9. Um stets eine Information über das Bildseitenverhältnis des Videosignals zur Verfügung zu haben, muß ein Kennsignal für das Bildseitenverhältnis des Videosignals von der Videoquelle zur Videosenke übertragen werden.

Aus der EP-A-0 213 912 ist es bekannt, in der vertikalen Austastlücke eines Fernsehsignals ein Flag als Kennung für das Bildseitenverhältnis des Fernsehsignals zu übertragen.

In der EP-A-0 309 876 ist ein MAC-Fernsehübertragungssystem beschrieben, bei welchem während einer definierten Zeile der Vertikalaustastzeit ein aus einem oder mehreren digitalen Wörtern bestehendes Kennsignal übertragen wird, welches in einem Empfangsgerät selbsttätig eine Umschaltung auf MAC-Betrieb bewirkt.

Aus der EP-A-0 168 104 ist es bekannt, Kennbits für das Bildseitenverhältnis eines MAC-Fernsehsignals entweder in der Zeile 625 oder innerhalb der Ton-/Datenpakete der Adresse 0 zu übertragen.

Im Zusammenhang mit Satelliten-Farbfernsehsystemen ist es bereits bekannt, ein derartiges Kennsignal innerhalb des Ton/Datenpakets im sog. "service identification channel", d. h. in Paketen der Adresse 0̸, zu übertragen. Im Satellitendecoder wird dieses Kennsignal erkannt und kann je nachdem, ob empfangsseitig ein Bildschirm mit einem Bildseitenverhältnis von 16:9 oder 4:3 zur Verfügung steht - beispielsweise zur Umschaltung des Expansionsfaktors für die übertragenen Signale verwendet werden, welche senderseitig unterschiedlich komprimiert wurden. Der Nachteil einer derartigen Kennsignalübertragung besteht darin, daß das genannte Kennsignal in dem am Ausgang des Satellitendecoders erhaltenen R, G, B- oder FBAS-Signal nicht mehr zur Verfügung steht.

Die Aufgabe der Erfindung besteht darin, einen Weg aufzuzeigen, wie auf einfache Art und Weise ein einfach auszuwertendes Kennsignal für das Bildseitenverhältnis eines Videosignals erzeugt werden kann, welches derart beschaffen ist, daß die Wahrscheinlichkeit, daß ein Kennsignal durch Signalanteile herkömmlicher Signale vorgetäuscht wird, sehr gering ist.

Diese Aufgabe wird bei einer Einrichtung der im Oberbegriff des Anspruchs 1 angegebenen Art durch die im kennzeichnenden Teil des Anspruchs 1 angegebenen Merkmale gelöst. Vorteilhafte Ausgestaltungen einer derartigen Einrichtung sind in den Ansprüchen 2 - 6 beschrieben. Eine Einrichtung zur Auswertung von Kennsignalen, welche in einer Einrichtung nach einem der Ansprüche 1 - 6 erzeugt werden, ist Gegenstand des Anspruchs 7. Die Ansprüche 8 - 10 betreffen vorteilhafte Ausgestaltungen der im Anspruch 7 beschriebenen Einrichtung.

Die Vorteile der Erfindung bestehen insbesondere darin, daß die im Rahmen des genannten Kennsignals übertragenen Schwarz- und Weißwerte in den empfängerseitigen Videoverarbeitungsschaltkreisen gleichzeitig als Referenzwerte für Schwarz und Weiß dienen. Ein weiterer Vorteil der Erfindung besteht darin, daß sie universell einsetzbar ist, beispielsweise daß die an der Bildquelle vorgenommene Signalisierung die Signalpfade terrestrische Übertragung, Satellitenübertragung, Kabelübertragung wie auch die Speicherung des Videosignals mit Videorecorder oder Videodisc ohne Probleme passieren kann, ohne daß es einer Umcodierung bedarf. Weitere vorteilhafte Eigenschaften der Erfindung ergeben sich aus der Erläuterung von Ausführungsbeispielen anhand der Figuren.

Es zeigt
- Figur 1 ein Blockschaltbild einer Einrichtung zur Erzeugung eines Kennsignals,
- Figur 2 Diagramme zur Erläuterung der Funktionsweise der Zeitgeberschaltung 5 von Figur 1,
- Figur 3 ein Blockschaltbild einer Einrichtung zur Auswertung eines Kennsignals, und
- Figur 4 Diagramme zur Erläuterung der Funktionsweise der Zeitgeberschaltung 21 von Figur 3.

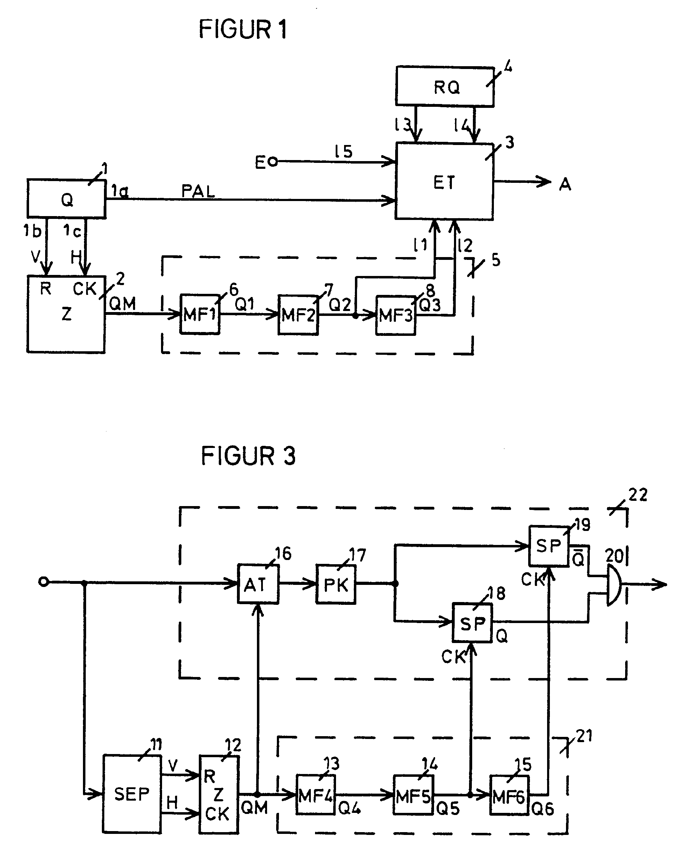

Die Figur 1 zeigt ein Blockschaltbild einer Einrichtung zur Erzeugung eines Kennsignals. Diese weist eine Videosignalquelle 1, beispielsweise eine Videokamera, einen Zeilenzähler 2, eine Eintastschaltung 3, eine Referenzpegelquelle 4 und eine Zeitgeberschaltung 5 auf, welche entweder mehrere in Reihe geschaltete Monoflops oder eine Zählerkette enthält.

Die Videosignalquelle 1 stellt an ihren Ausgängen 1a, 1b und 1c beispielsweise ein PAL-Videosignal mit einem Bildseitenverhältnis von 16:9 oder 4:3, die Vertikalsynchronimpulse V und die Horizontalsynchronimpulse H zur Verfügung. Die Vertikalsynchronimpulse V werden dem Rücksetzeingang R und die Horizontalsynchronimpulse H dem Takt- bzw. Zähleingang CK des Zeilenzählers 2 zugeführt.

Beim vorliegenden Ausführungsbeispiel soll ein Kennsignal für das Bildseitenverhältnis in die 13. Zeile nach dem Vertikalsynchronimpuls eingesetzt werden. Folglich steht am Ausgang QM des Zeilenzählers 2 ein die 13. Zeile markierendes Signal zur Verfügung, welches mit seiner Vorderflanke einen ersten Monoflop 6 triggert. Die Eigenzeit bzw. Standzeit dieses Monoflops 6 ist derart bemessen, daß er bei Beginn des aktiven Zeilenintervalles der Zeile 13 in seinen stabilen Zustand zurückkippt. Dadurch wird der mit dem Ausgang des ersten Monoflops 6 verbundene zweite Monoflop 7 getriggert. Die Eigenzeit dieses zweiten Monoflops 7 ist derart bemessen, daß er genau in der Mitte des aktiven Zeilenintervalles der Zeile 13 in seinen stabilen Zustand zurückkippt. Dadurch wird der mit dem Ausgang des zweiten Monoflops 7 verbundene dritte Monoflop 8 getriggert. Die Eigenzeit dieses dritten Monoflops 8 ist derart bemessen, daß er am Ende des aktiven Zeilenintervalles in seinen stabilen Zustand zurückkippt.

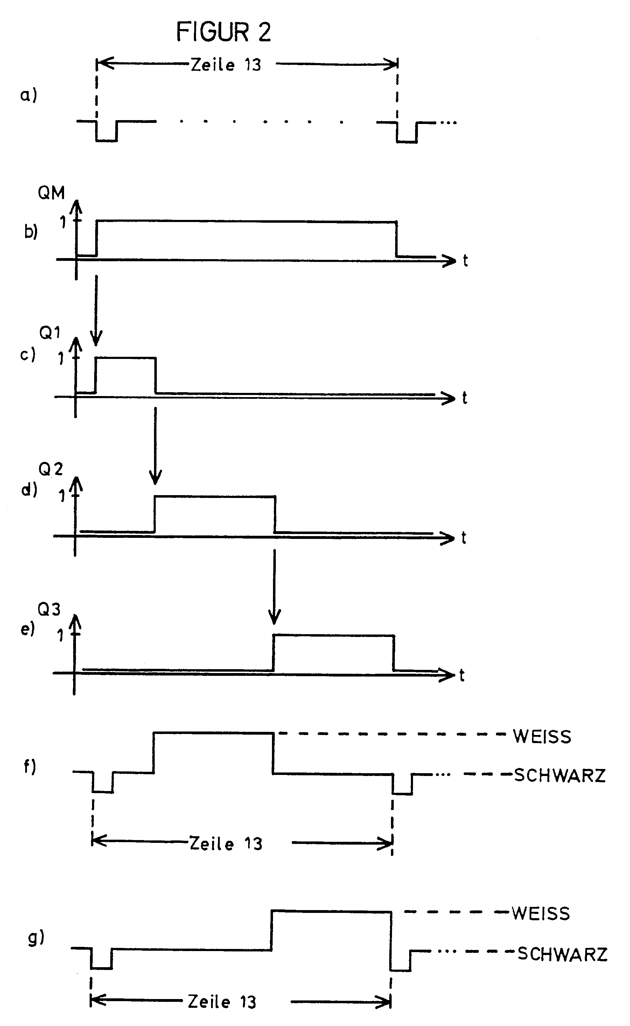

Diese Vorgänge sind in Figur 2 veranschaulicht. Die Figur 2a zeigt den grundsätzlichen Signalverlauf in der 13. Zeile vor der Einfügung eines Kennsignals, die Figur 2b das Ausgangssignal QM des Zeilenzählers 2, die Figur 2c das Ausgangssignal Q1 des ersten Monoflops 6, die Figur 2d das Ausgangssignal Q2 des zweiten Monoflops 7 und die Figur 2e das Ausgangssignal Q3 des dritten Monoflops 8. Die Signale Q2 und Q3, die die erste bzw. zweite Hälfte des aktiven Zeilenintervalles der 13. Zeile markieren, werden als Eintaststeuersignale über die Verbindungen 11 und 12 der Eintastschaltung 3 zugeführt.

Der Eintastschaltung 3 werden ferner über die Verbindung 13 ein Weißpegelsignal und über die Verbindung 14 ein Schwarzpegelsignal, welche in einer Referenzpegelguelle 4 erzeugt werden, sowie über die Verbindung 15 ein Einstellsignal E für das gewünschte Bildseitenverhältnis zugeführt. Dieses Einstellsignal für das Bildseitenverhältnis kann beispielsweise manuell mittels eines nicht gezeichneten der Eintastschaltung 3 zugeordneten Schalters erzeugt werden.

Weiterhin wird der Eintastschaltung 3 das in der Videosignalquelle 1 erzeugte PAL-Videosignal zugeführt. In der Eintastschaltung 3 wird unter Steuerung durch die in der Zeitgeberschaltung 5 erzeugten Eintaststeuersignale Q2 und Q3 und in Ansprache auf das Einstellsignal E bei Vorliegen eines 4:3-Signales in die erste Hälfte des aktiven Zeilenintervalles der 13. Zeile der Schwarzpegel und in die zweite Hälfte des aktiven Zeilenintervalles der 13. Zeile der Weißpegel und bei Vorliegen eines 16:9-Signales in die erste Hälfte des aktiven Zeilenintervalles der 13. Zeile der Weißpegel und in die zweite Hälfte des aktiven Zeilenintervalles der 13. Zeile der Schwarzpegel als Kennsignal für das jeweilige Bildseitenverhältnis eingesetzt.

Am Ausgang A der Eintastschaltung 3 steht damit ein Videosignal zur Verfügung, dessen 13. Zeile ein Kennsignal für das Bildseitenverhältnis enthält. Beispiele für den Verlauf eines derartigen Signals sind in den Figuren 2f und 2g gezeigt.

Das Ausgangssignal der Eintastschaltung 3 kann an eine beliebige übertragungsstrecke geleitet werden.

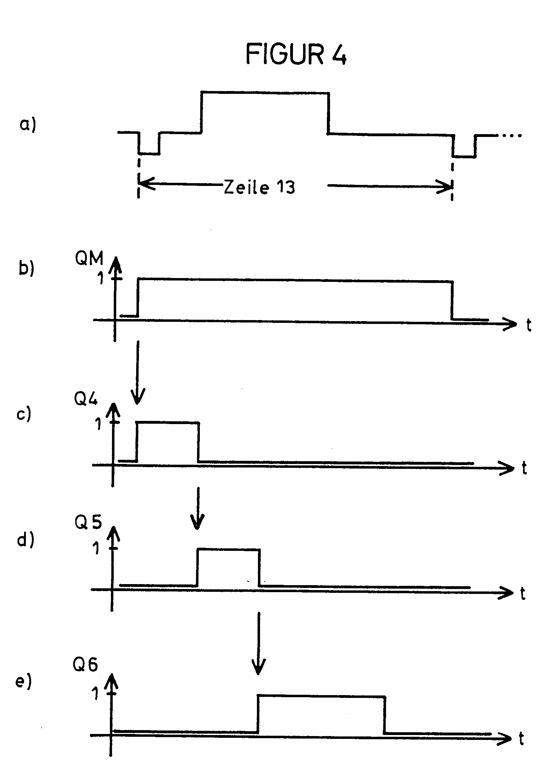

Eine vorteilhafte Ausführungsform der Erfindung besteht darin, einen an die Eintastschaltung 3 angeschlossenen MAC-Coder mit einer Schaltung zur Auswertung des Kennsignals auszurüsten, deren grundsätzlicher Aufbau unten anhand von Figur 3 erläutert wird. Das Ausgangssignal dieser Auswerteschaltung kann dazu verwendet werden, das bei bekannten Satelliten-Farbfernsehsystemen übliche Kennsignal für das Bildseitenverhältnis automatisch zu erzeugen und - wie oben bereits ausgeführt wurde - in den "service identification channel" einzufügen.

Die Figur 3 zeigt ein Blockschaltbild einer Einrichtung zur Auswertung eines auf vorstehend beschriebene Art und Weise erzeugten Kennsignals. Sie weist eine Synchronsignalabtrennstufe 11, einen Zeilenzähler 12, eine Zeitgeberschaltung 21, welche entweder mehrere in Reihe geschaltete Monoflops oder eine Zählerkette enthält, und eine Auswerteschaltung 22 auf.

Mittels der Synchronsignalabtrennstufe 11 werden aus dem übertragenen Signal die Vertikal- und die Horizontalsynchronimpulse abgetrennt. Die Vertikalsynchronimpulse V werden dem Rücksetzeingang R und die Horizontalsynchronimpulse H dem Takt- bzw. Zähleingang CK des Zeilenzählers 12 zugeführt.

Am Ausgang Q des Zeilenzählers 12 steht ein die 13. Zeile markierendes Signal QM zur Verfügung, welches dem Taktsignaleingang eines vierten Monoflops 13 zugeführt wird. Die Eigenzeit dieses Monoflops ist derart bemessen, daß er bei Beginn des aktiven Zeilenintervalles der Zeile 13 in seinen stabilen Zustand zurückkippt. Dadurch wird der mit dem Ausgang des vierten Monoflops 13 verbundene fünfte Monflop 14 getriggert. Die Eigenzeit dieses fünften Monoflops 14 ist derart bemessen, daß er in der Mitte der ersten Hälfte des aktiven Zeilenintervalles der 13. Zeile in seinen stabilen Zustand zurückkippt. Dadurch wird der mit dem Ausgang des fünften Monoflops 14 verbundene sechste Monoflop 15 getriggert. Die Eigenzeit dieses sechsten Monoflops 15 ist derart bemessen, daß er in der Mitte der zweiten Hälfte des aktiven Zeilenintervalles der 13. Zeile in seinen stabilen Zustand zurückkippt.

Diese Vorgänge sind in Figur 4 veranschaulicht. Die Figur 4a zeigt den grundsätzlichen Signalverlauf in der 13. Zeile, welcher mit dem in Figur 2f gezeigten Signalverlauf übereinstimmt. Die Figur 4b zeigt das Ausgangssignal QM des Zeilenzählers 12, die Figur 4c das Ausgangssignal Q4 des vierten Monoflops 13, die Figur 4d das Ausgangssignal Q5 des fünften Monoflops 14 und die Figur 4e das Ausgangssignal Q6 des sechsten Monoflops 15.

Das Signal QM wird ferner einer Austastschaltung 16 zugeführt, die aus dem übertragenen Signal die Zeile 13, in der das Kennsignal für das Bildseitenverhältnis übertragen wird, absondert. Das abgesonderte Signal wird einem Pegelkomparator bzw. Pegeldiskriminator 17 zugeführt, in welchem das Signal mit einem in der Mitte zwischen dem Schwarz- und dem Weißwert liegenden Schwellwert verglichen wird. Allen zwischen dem Schwellwert und dem Weißwert liegenden Pegeln wird der Weißwert und allen zwischen dem Schwellwert und dem Schwarzwert liegenden Pegeln wird der Schwarzwert zugeordnet.

Das Ausgangssignal des Pegelkomparators 17 wird zwei parallel angeordneten Zwischenspeichern 18 und 19 zugeführt, deren Einlesetakt die Signale Q5 und Q6 sind. Folglich wird im Zwischenspeicher 18 der in der Mitte der ersten Hälfte des aktiven Zeilenintervalles übertragene Signalpegel und im Zwischenspeicher 19 der in der Mitte der zweiten Hälfte des aktiven Zeilenintervalles übertragene Signalpegel abgespeichert.

Das Ausgangssignal Q des Zwischenspeichers 18 und das Ausgangssignal Q̅ des Zwischenspeichers 19 werden einem UND-Gatter 20 zugeführt, an dessen Ausgang dann, wenn die Zeile 13 ein Kennsignal für ein Bildseitenverhältnis von 16:9 enthält, ein Signal mit hohem Pegel und dann, wenn die Zeile 13 ein Kennsignal für ein Bildseitenverhältnis von 4:3 enthält, ein Signal mit niedrigem Pegel zur Verfügung steht oder umgekehrt. Dieses Signal kann zur Umschaltung der Ablenkung oder zur Umformatierung des Bildes mittels eines Bildspeichers verwendet werden.

Demnach wird bei dieser mittels der Figuren 3 und 4 vorstehend erläuterten Ausführungsform eine Einrichtung zur Auswertung eines Kennsignals beschrieben, welche einen Zeilenzähler 12, welcher an seinem Ausgang QM ein die Kennsignalzeile markierendes Signal abgibt, eine an den Ausgang QM des Zeilenzählers 12 angeschlossene Zeitgeberschaltung 21 zur Erzeugung von Abfragezeitpunktsignalen Q5, Q6, und eine Auswerteschaltung 22, die in Ansprache auf die Abfragezeitpunktsignale Q5, Q6 die Pegel des übertragenen Videosignals abfragt, aufweist. Diese Einrichtung zur Auswertung eines Kennsignals ist in einem Satelliten-Fernsehsender angeordnet, welcher einen Satellitensignalcoder aufweist. Weiterhin weist der Satellitensignalcoder eine Schaltung auf, mittels der automatisch aus dem ausgewerteten Kennsignal ein codiertes Kennsignal gewonnen und in das im Zeitmultiplex mit der Bildinformation übertragene Datenpaket eingesetzt wird.

Eine vorteilhafte Weiterbildung der Erfindung besteht darin, das Kennsignal für das Bildseitenverhältnis nur in der ersten Hälfte des aktiven Zeilenintervalles der 13. Zeile zu übertragen und die zweite Hälfte des aktiven Zeilenintervalles zur Übertragung weiterer Kennsignale zu verwenden.

Beispielsweise kann die zweite Hälfte des aktiven Zeilenintervalles der 13. Zeile eine Kennung dafür enthalten, ob die Videosignalquelle ursprünglich das Videosignal mit 25 oder mit 50 Bewegungsphasen pro Sekunde erzeugt hat. Enthält die markierende Stelle der zweiten Zeilenhälfte beispielsweise den Schwarzpegel, so liefert die Videosignalquelle 25 Bewegungsphasen pro Sekunde. Enthält die markierende Stelle der zweiten Zeilenhälfte beispielsweise den Weißpegel, so liefert die Videosignalquelle 50 Bewegungsphasen pro Sekunde.

Die empfangsseitige Auswertung dieses(r) weiteren Kennsignals(e) kann - wie es oben grundsätzlich beschrieben wurde - unter Verwendung von einer Zeitgebergeberschaltung erfolgen, welche in Reihe geschaltete Monoflops, deren Eigenzeiten charakteristisch bemessen sind, oder auch eine Zählerkette enthält.

Dieses weitere Kennsignal kann dazu verwendet werden, einen im Empfangsgerät angeordneten Bildspeicher derart anzusteuern, daß er - je nach Videosignalquelle - in einer von zwei Wiedergabebetriebsarten arbeitet.

Wurde die wiederzugebende Sendung durch eine Filmabtastung gewonnen, dann wird nur jedes zweite Halbbild des Eingangssignals in den Bildspeicher eingeschrieben und zu einer Wiedergabe mit verdoppelter Bildwechselfrequenz viermal nacheinander doppelt so schnell ausgelesen. Dies führt zu einem verbesserten Bildeindruck, da das Zwischenzeilenflimmern nicht mehr erkennbar ist. Die verringerte zeitliche Auflösung spielt in diesem Fall keine Rolle, da beim Film ohnehin nur 25 Bewegungsphasen pro Sekunde vorgesehen sind.

Wurde die wiederzugebende Sendung mit 50 Bewegungsphasen pro Sekunde erzeugt, dann wird in der zweiten Betriebsart jedes Halbbild des Videosignals in den Bildspeicher eingeschrieben und doppelt so schnell zweimal nacheinander ausgelesen.

## Patentansprüche

1. Einrichtung zur Erzeugung eines Kennsignals für das Bildseitenverhältnis eines Videosignals, mit einer Videosignalquelle zur Erzeugung eines Videosignals mit einem ersten bzw. zweiten Bildseitenverhältnis und mit einer Eintastschaltung (3), mittels der in eine Kennsignalzeile der vertikalen Austastlücke des Videosignals ein Kennsignal für das erste bzw. zweite Bildseitenverhältnis eingetastet wird,
**dadurch gekennzeichnet,** daß
das in der Eintastschaltung (3) in eine Kennsignalzeile der vertikalen Austastlücke des Videosignals eingetastete Kennsignal aus einer einmaligen zeitlich aufeinanderfolgenden Übertragung des Schwarzwertes und des Weißwertes bzw. umgekehrt besteht, und daß die zeitliche Länge der einmaligen aufeinanderfolgenden Übertragung des Schwarzwertes und des Weißwertes der Hälfte oder der Gesamtlänge eines aktiven Zeilenintervalles entspricht.

2. Einrichtung nach Anspruch 1,
**dadurch gekennzeichnet,** daß
der Eintastschaltung (3) ein Kennsignal (E) für das Bildseitenverhältnis des Videosignals zugeführt wird.

3. Einrictung nach Anspruch 1 oder 2,
**dadurch gekennzeichnet**, daß
sie
- einen Zeilenzähler (2), dessen Rücksetzeingang (R) die Vertikalsynchronimpulse und dessen Zähleingang (CK) die Horizontalsynchronimpulse des Videosignals zugeführt werden und welcher an seinem Ausgang (QM) ein die Kennsignalzeile markierendes Signal abgibt, und
- eine an den Ausgang (QM) des Zeilenzählers (2) angeschlossene Zeitgeberschaltung (5) zur Erzeugung von Eintaststeuersignalen für die Eintastschaltung (3) aufweist.

4. Einrichtung nach Anspruch 3,
**dadurch gekennzeichnet**, daß
die Zeitgeberschaltung (5) mehrere in Reihe geschaltete Monoflops (6, 7, 8) enthält.

5. Einrichtung nach Anspruch 3,
**dadurch gekennzeichnet**, daß
die Zeitgeberschaltung (5) eine Zählerkette enthält.

6. Einrichtung nach einem oder mehreren der vorhergehenden Ansprüche,
**dadurch gekennzeichnet,** daß
mittels der Eintastschaltung (3) ein weiteres Kennsignal für das Videosignal eingetastet wird, welches den Schwarz- und/oder Weißwert enthält und Auskunft über die Anzahl der Bewegungsphasen pro Sekunde gibt, mit der das Videosignal erzeugt wurde.

7. Einrichtung zur Auswertung eines Kennsignals, welches mittels einer Einrichtung nach einem oder mehreren der vorhergehenden Ansprüche erzeugt wurde, mit
- einem Zeilenzähler (12), welcher an seinem Ausgang (QM) ein die Kennsignalzeile markierendes Signal abgibt,
- einer an den Ausgang (QM) des Zeilenzählers (12) angeschlossenen Zeitgeberschaltung (21) zur Erzeugung von Abfragezeitpunktsignalen (Q5, Q6), und
- einer Auswerteschaltung (22), die in Ansprache auf die Abfragezeitpunktsignale (Q5, Q6) die Pegel des übertragenen Videosignals abfragt,
**dadurch gekennzeichnet**, daß
sie in einem Satelliten-Fernsehsender angeordnet ist, welcher einen Satellitensignalcoder aufweist, und daß der Satellitensignalcoder eine Schaltung aufweist, mittels der automatisch aus dem ausgewerteten Kennsignal ein codiertes Kennsignal gewonnen und in das im Zeitmultiplex mit der Bildinformation übertragene Datenpaket eingesetzt wird.

8. Einrichtung nach Anspruch 7,
**dadurch gekennzeichnet**, daß
die Zeitgeberschaltung (21) mehrere in Reihe geschaltete Monoflops (13, 14, 15) enthält.

9. Einrichtung nach Anspruch 7,
**dadurch gekennzeichnet,** daß
die Zeitgeberschaltung (21) eine Zählerkette enthält.

10. Einrichtung nach einem oder mehreren der Ansprüche 7 - 9,
**dadurch gekennzeichnet,** daß
die Auswerteschaltung (22) zwei Speichereinheiten (18, 19) enthält, in denen unter Steuerung durch die Abfragezeitpunktsignale (Q5, Q6) dem Pegel des Videosignals entsprechende Signale abgespeichert werden, und daß die Ausgangssignale der beiden Speichereinheiten (18, 19) einer Verknüpfungsschaltung (20) zugeführt werden.

## Claims

1. Device for generating an identification signal for the picture aspect ratio of a video signal, having a video-signal source for generating a video signal with a first or second picture aspect ratio, and having an insertion circuit (3) by means of which an identification signal for the first or second picture aspect ratio, respectively, is inserted into an identification-signal line of the field blanking interval of the video signal, characterized in that the identification signal inserted in the insertion circuit (3) into an identification-signal line of the field blanking interval of the video signal comprises a unique consecutive transmission with respect to time of the black level and of the white level, or vice versa, and in that the length with respect to time of the unique consecutive transmission of the black level and of the white level corresponds to half of an active line interval or to the entire length of an active line interval.

2. Device according to Claim 1, characterized in that an identification signal (E) for the picture aspect ratio of the video signal is fed to the insertion circuit (3).

3. Device according to Claim 1 or 2, characterized in that it has
- a line counter (2), to whose reset input (R) the field synchronizing pulses of the video signal are fed and to whose counting input (CK) the horizontal synchronizing pulses of the video signal are fed and which delivers a signal marking the identification-signal line at its output (QM), and
- a timer circuit (5), connected to the output (QM) of the line counter (2), for generating insertion control signals for the insertion circuit (3).

4. Device according to Claim 3, characterized in that the timer circuit (5) contains a plurality of series-connected monostable circuits (6, 7, 8).

5. Device according to Claim 3, characterized in that the timer circuit (5) contains a counter chain.

6. Device according to one or more of the preceding claims, characterized in that there is inserted by means of the insertion circuit (3) a further identification signal for the video signal which contains the black and/or white level and provides information about the number of movement phases per second with which the video signal was generated.

7. Device for evaluating an identification signal which was generated by means of a device according to one or more of the preceding claims, comprising
- a line counter (12) which delivers a signal marking the identification-signal line at its output (QM),
- a timer circuit (21), connected to the output (QM) of the line counter (12), for generating sampling time signals (Q5, Q6), and
- an evaluation circuit (22) which samples the level of the transmitted video signal in response to the sampling time signals (Q5, Q6),
characterized in that it is fitted in a satellite television transmitter which has a satellite signal coder, and in that the satellite signal coder has a circuit, by means of which a coded identification signal is obtained automatically from the evaluated identification signal and is inserted into the data packet transmitted with the picture information in time-division multiplexing.

8. Device according to Claim 7, characterized in that the timer circuit (21) contains a plurality of series-connected monostable circuits (13, 14, 15).

9. Device according to Claim 7, characterized in that the timer circuit (21) contains a counter chain.

10. Device according to one or more of Claims 7 - 9, characterized in that the evaluation circuit (22) contains two memory units (18, 19) in which signals corresponding to the level of the video signal are stored under the control of the sampling time signals (Q5, Q6), and in that the output signals of the two memory units (18, 19) are fed to a combinatory circuit (20).

## Revendications

1. Dispositif pour produire un signal caractéristique pour le format d'image d'un signal vidéo, comportant une source de signaux vidéo servant à produire un signal vidéo possédant des premier et second formats d'image et. un circuit d'insertion (3), à l'aide duquel un signal caractéristique pour le premier ou le second format d'image est inséré dans une ligne du signal caractéristique de l'intervalle de suppression verticale du signal vidéo, caractérisé en ce que le signal caractéristique inséré, dans le circuit d'insertion (3), dans une ligne du signal caractéristique de l'intervalle de suppression verticale du signal vidéo, est constitué par une transmission successive dans le temps, exécutée une seule fois, du niveau de noir et du niveau de blanc ou inversement, et que la durée de la transmission successive, effectuée une fois, du niveau de noir et du niveau de blanc correspond à la moitié ou à la totalité de la longueur d'un intervalle actif de ligne.

2. Dispositif selon la revendication 1, caractérisé en ce qu'un signal caractéristique (E) pour le format d'image du signal vidéo est envoyé au circuit d'insertion (3).

3. Dispositif selon la revendication 1 ou 2, caractérisé en ce qu'il comporte
- un compteur de lignes (2), à l'entrée de remise à zéro (R) duquel sont envoyées les impulsions de synchronisation verticale et à l'entrée de comptage (CK) duquel sont envoyées les impulsions de synchronisation horizontale du signal vidéo, et qui délivre, à sa sortie (QM), un signal marquant la ligne du signal
caractéristique, et
- un circuit de minuterie (5) raccordé à la sortie (QM) du compteur de lignes (2) et servant à produire des signaux de commande d'insertion pour le circuit d'insertion (3).

4. Dispositif selon la revendication 3, caractérisé en ce que le circuit de minuterie (5) comprend plusieurs bascules monostables (6,7,8) branchées en série.

5. Dispositif selon la revendication 3, caractérisé en ce que le circuit de minuterie (5) comprend une chaîne de compteurs.

6. Dispositif selon une ou plusieurs des revendications précédentes, caractérisé en ce qu'à l'aide du circuit d'insertion (3), on insère un autre signal caractéristique pour le signal vidéo, qui contient le niveau de noir et/ou le niveau de blanc et fournit une information concernant le nombre des phases de déplacement par seconde, avec lequel le signal vidéo a été produit.

7. Dispositif pour évaluer un signal caractéristique, qui a été produit au moyen d'un dispositif selon une ou plusieurs des revendications précédentes, comportant
- un compteur de lignes (12), qui délivre, à sa sortie (QM), un signal marquant la ligne du signal caractéristique,
- un circuit de minuterie (21) raccordé à la sortie (QM) du compteur de lignes (12) et servant à produire des signaux d'instants d'interrogation (Q5,Q6), et
- un circuit d'évaluation (22), qui, en réponse aux signaux d'instants d'interrogation (Q5,Q6), interroge le niveau du signal vidéo reçu,
caractérisé par le fait qu'il est disposé dans un émetteur de télévision de satellite, qui possède un codeur de signaux du satellite et que le codeur de signaux du satellite comporte un circuit, à l'aide duquel un signal caractéristique codé est obtenu automatiquement à partir du signal caractéristique évalué et est inséré dans le paquet de données qui est transmis au multiplexeur temporel avec l'information d'image.

8. Dispositif selon la revendication 7, caractérisé en ce que le circuit de minuterie (21) comprend plusieurs bascules monostables (13,14,15) branchées en série.

9. Dispositif selon la revendication 7, caractérisé en ce que le circuit de minuterie (21) comprend une chaîne de compteurs.

10. Dispositif selon une ou plusieurs des revendications 7-9, caractérisé en ce que le circuit d'évaluation (22) comprend deux unités de mémoire (18,19), dans lesquelles des signaux correspondant au niveau du signal vidéo sont mémorisés sous la commande des signaux d'instants d'interrogation (Q5,Q6), et que les signaux de sortie des deux unités de mémoire (18,19) sont envoyés à un circuit combinatoire (20).
